# EUROPÄISCHE PATENTSCHRIFT

(11) **EP 3 113 438 B1**
(45) Veröffentlichungstag und Bekanntmachung des Hinweises auf die Patenterteilung: **19.04.2017**
(21) Anmeldenummer: 15174548.6
(22) Anmeldetag: 30.06.2015
(51) Int. Cl.: H04L 29/06

(54) **VERFAHREN ZUR KONFIGURATION VON ELEKTRONISCHEN GERÄTEN, INSBESONDERE ZUR KONFIGURATION VON KOMPONENTEN EINES ZUGANGSKONTROLLSYSTEMS**
METHOD FOR CONFIGURING ELECTRONIC DEVICES, IN PARTICULAR FOR CONFIGURATION OF COMPONENTS OF AN ACCESS CONTROL SYSTEM
PROCEDE DE CONFIGURATION D'APPAREILS ELECTRIQUES, EN PARTICULIER DE CONFIGURATION DE COMPOSANTS D'UN SYSTEME DE CONTROLE D'ACCES

(43) Veröffentlichungstag der Anmeldung: 04.01.2017
(73) Patentinhaber: SKIDATA AG, 5083 Grödig/Salzburg (AT)
(72) Erfinder: Keyser, York, 5023 Salzburg (AT)
(74) Vertreter: Karakatsanis, Georgios

(56) Entgegenhaltungen:
- EP-A1- 2 469 374
- US-A1- 2007 118 745

## Beschreibung

Die vorliegende Erfindung bezieht sich auf ein Verfahren zur Konfiguration von elektronischen Geräten und insbesondere zur Konfiguration von Komponenten eines Zugangskontrollsystems für Personen oder Fahrzeuge.

Aus dem Stand der Technik bekannte Zugangskontrollsysteme umfassen in der Regel mehrere Zugangskontrollvorrichtungen mit einer Leseeinheit zum Auslesen der zur Überprüfung der Gültigkeit einer Zugangsberechtigung erforderlichen Daten und einem Sperrorgan, welches von einem über eine Steuerung gesteuerten Aktuator betätigt wird, um einer Person bzw. einem Fahrzeug zu ermöglichen, ein Gebäude bzw. ein Gelände zu betreten oder zu verlassen. Zudem umfassen Zugangskontrollvorrichtungen Verkaufsautomaten für die Zugangsberechtigungen und/oder Bezahlautomaten zum Entrichten der für die Nutzung eines Zugangskontrollsystems fälligen Gebühr.

Aus dem Stand der Technik ist bekannt, zum Installieren und Konfigurieren einer neuen Komponente eines derartigen Systems zuerst mittels eines Speichermediums, beispielsweise mittels einer SD-Karte, auf das Gerät ein Betriebssystem zu installieren.

Dieses Betriebssystem ist in der Regel ein allgemeines Betriebssystem, welches nicht an das zu installierende Gerät angepasst ist. So muss die IP-Konfiguration oder die Definition von wichtigen Parametern und Umgebungsvariablen wie z.B. von Serveradressen manuell durchgeführt werden.

Aus dem Stand der Technik ist auch bekannt, dass nach der Installation des allgemeinen Betriebssystems ein vorkonfigurierter USB-Stick verwendet wird, welcher über eine auf dem zu konfigurierenden Gerät vorinstallierte Software (einen so genannten Bootstrap-loader) ausgelesen wird. Mittels dieser Software werden die erforderlichen Konfigurationsparameter, z.B. Uhrzeit, Datum und Umgebungsvariablen aus dem USB-Stick heruntergeladen und in das Betriebssystem installiert. Nach diesem Schritt stellt ein Techniker mittels eines SSH-Netzwerkprotokolls eine Verbindung zwischen dem zu konfigurierenden Gerät und einem weiteren Gerät her und kreiert ein neues Passwort. Bei der Eingabe des neuen Passworts können Fehler passieren, wenn z.B. dieses nicht richtig eingegeben wird. Zudem erfolgt in der Regel die Eingabe des neuen Passwortes unverschlüsselt, was in sicherheitskritischen Situationen resultieren kann.

Um über den Bootstrap-loader eine IP-Adresse einzustellen, muss die MAC-Adresse (Media-Access-Control-Adresse, nämlich die Hardware-Adresse des Netzwerkadapters des zu konfigurierenden Geräts) bekannt sein, was nicht immer der Fall ist. Folglich muss sich ein Techniker auf das zu konfigurierende Gerät einloggen, um die IP-Konfiguration per Hand durchzuführen, wenn die MAC-Adresse nicht bekannt ist. Weiteren Stand der Technik offenbart die US-Patentanmeldung US2007/118745A1. Der vorliegenden Erfindung liegt die Aufgabe zugrunde, ein Verfahren zur Konfiguration von elektronischen Geräten und insbesondere zur Konfiguration von Komponenten eines Zugangskontrollsystems für Personen oder Fahrzeuge anzugeben, durch dessen Durchführung die aus dem Stand der Technik bekannten und oben erwähnten Nachteile vermieden werden.

Diese Aufgabe wird durch die Merkmale des Patentanspruches 1 gelöst. Weitere erfindungsgemäße Ausgestaltungen und Vorteile gehen aus den Unteransprüchen hervor.

Demnach wird ein Verfahren zur Konfiguration von elektronischen Geräten und insbesondere zur Konfiguration von Komponenten eines Zugangskontrollsystems für Personen oder Fahrzeuge vorgeschlagen, im Rahmen dessen ein Konfigurationsgerät verwendet wird, welches mit dem zu konfigurierenden Gerät verbindbar ist, wobei die Verbindung kabelgebunden oder kabellos sein kann.

Das Konfigurationsgerät ist ein Gerät mit eigener CPU, Speichermittel und Software und umfasst ein sogenanntes Trusted Execution Environment, nämlich einen Bereich im nichtflüchtigen Speicher und/oder in der CPU, auf den nur speziell dafür freigeschaltete Software Zugriff hat, wodurch eine sichere Ausführungsumgebung für diese Software zur Verfügung gestellt wird. Ein derartiges Trusted Execution Environment ist beispielsweise von der Firma ARM unter der Bezeichnung TrustZone entwickelt worden.

Das Konfigurationsgerät ist vorzugsweise als USB-Stick ausgeführt, kann aber auch als kleiner Computer mit einer externen Stromversorgung ausgeführt sein.

Das erfindungsgemäße Verfahren umfasst folgende Schritte:
Verbinden des Konfigurationsgerätes mit dem zu konfigurierenden Gerät zum Zweck der Datenkommunikation kabellos oder über ein Kabel;

Durchführen einer gegenseitigen Authentifizierung;
Übertragen einer vorgegebenen Konfiguration auf das zu konfigurierende Gerät, wobei die Konfiguration Netzwerkeinstellungen und Umgebungsvariablen umfasst und wobei eine Bedienperson mittels einer mit dem Konfigurationsgerät verbindbaren Anzeigevorrichtung den Vorgang überwachen kann und manuell über eine mit den Konfigurationsgerät verbindbare Eingabevorrichtung Änderungen vornehmen kann;
Übertragen mittels des Trusted Execution Environment des Konfigurationsgerätes eines RSA-Schlüssels bzw. eines Krypto-Schlüssels, der den aktuellen Sicherheitsstandards entspricht, zum Ermöglichen des Zugriffs auf das zu konfigurierende Gerät über ein SSH-Protokoll auf das zu konfigurierende Gerät und Verifizieren des Schlüssels mittels einer verschlüsselten Verbindung zwischen dem Konfigurationsgerät und dem zu konfigurierenden Gerät;
Auslesen oder Generieren eines Passwortes mittels des Trusted Execution Environment des Konfigurationsgerätes und Übertragen desselben mittels einer verschlüsselten Verbindung auf das zu konfigurierende Gerät;
Überprüfen des Passworts mittels einer verschlüsselten Verbindung und anschließender automatischen Eingabe des Passworts;
Erstellen einer Datei enthaltend sämtliche Konfigurationsinformationen, beispielsweise IP- und MAC-Adressen zur Dokumentation des Konfigurationsvorgangs, welche im Konfigurationsgerät außerhalb des Trusted Execution Environment gespeichert wird, wobei diese Datei keine sicherheitsrelevanten Informationen, wie insbesondere den RSA-Schlüssel bzw. einen Krypto-Schlüssel, der den aktuellen Sicherheitsstandards entspricht und das Passwort enthält und als Referenz für zukünftige Konfigurationsprozesse dient;
Erstellen einer Verbindung zur Datenkommunikation zwischen dem Konfigurationsgerät und einem weiteren Computer, beispielsweise einem Notebook;
Erstellen einer sicheren Netzwerkverbindung über den weiteren Computer zu einem Server, die beispielsweise eine VPN-Verbindung sein kann;
Durchführung einer gegenseitigen Authentifizierung zwischen dem Konfigurationsgerät und dem Server;
Übertragen des Passwortes, des RSA-Schlüssels bzw. des Krypto-Schlüssels, der den aktuellen Sicherheitsstandards entspricht und weiterer, vorgegebener wichtiger Parameter mittels des Trusted Execution Environment des Konfigurationsgerätes auf ein Trusted Execution Environment auf dem Server über die sichere Netzwerkverbindung;
Verifizieren der Vollständigkeit der Übertragung des Passwortes, des RSA-Schlüssels und der weiteren wichtigen Parameter; und
Bei vollständiger Übertragung Löschen des Passwortes, des RSA-Schlüssels bzw. des Krypto-Schlüssels, der den aktuellen Sicherheitsstandards entspricht und der weiteren wichtigen Parameter, die im Konfigurationsgerät gespeichert sind, mittels des Trusted Execution Environment.

Gemäß der Erfindung erfolgt die Authentifizierung zwischen dem Konfigurationsgerät und dem zu konfigurierenden Gerät vorzugsweise mittels PGP-Verschlüsselung, wobei zu diesem Zweck jedes Gerät einen Schlüssel benötigt. Der entsprechende Schlüssel des Konfigurationsgerätes ist derart erstellt, dass er nach einer vorgegebenen Zeitspanne seine Gültigkeit verliert und ist mittels des Trusted Execution Environment im Konfigurationsgerät gespeichert.

Der RSA-Schlüssel bzw. der Krypto-Schlüssel, der den aktuellen Sicherheitsstandards entspricht, dient der Ermöglichung der Zugriffs auf das zu konfigurierende Gerät über ein SSH-Protokoll, insbesondere für den Fall, dass das Passwort nicht eingegeben oder dessen Gültigkeit nicht überprüft werden kann.

Nach erfolgter Authentifizierung wird vorzugsweise zum Übertragen einer vorgegebenen Konfiguration auf das zu konfigurierende Gerät eine ausführbare Datei auf einem temporären Speicher des zu konfigurierenden Gerätes übertragen, wobei der Befehl zum Ausführen der ausführbaren Datei über das Konfigurationsgerät mittels eines SSH-Netzwerkprotokolls über einen emulierten Ethernet-Port eingegeben wird.

Der RSA-Schlüssel bzw. der Krypto-Schlüssel, der den aktuellen Sicherheitsstandards entspricht, kann während des Konfigurationsvorgangs mittels des Trusted Execution Environment des Konfigurationsgerätes generiert werden oder ein mittels des Trusted Execution Environment gespeicherter Schlüssel sein. Am Ende des Konfigurationsvorgangs werden sämtliche Dateien mit Ausnahme der Datei enthaltend sämtliche Konfigurationsinformationen von dem Konfigurationsgerät gelöscht, nachdem sie auf den Server übertragen sind.

Durch die erfindungsgemäße Konzeption wird auf einfache Weise eine Installation durchgeführt, wobei das Passwort und weitere sicherheitsrelevante Parameter der Bedienperson nicht bekannt sind. Ferner sind das Passwort, der RSA-Schlüssel bzw. der Krypto-Schlüssel, der den aktuellen Sicherheitsstandards entspricht und weitere wichtige, vorgegebene Parameter vor Zugriffen unbefugter Personen geschützt.

Die Erfindung wird im Folgenden anhand der beigefügten Figuren beispielhaft näher erläutert. Es zeigen:
Figur 1: eine schematische Darstellung der zur Durchführung des Verfahrens benötigen Komponenten;
Figur 2: ein Flussdiagramm zur Veranschaulichung der Schritte des erfindungsgemäßen Verfahrens bei der Verbindung zwischen dem zu konfigurierenden Gerät und dem Konfigurationsgerät; und
Figur 3: ein Flussdiagramm zur Veranschaulichung der Schritte des erfindungsgemäßen Verfahrens bei der Verbindung zwischen dem Konfigurationsgerät und einem Server.

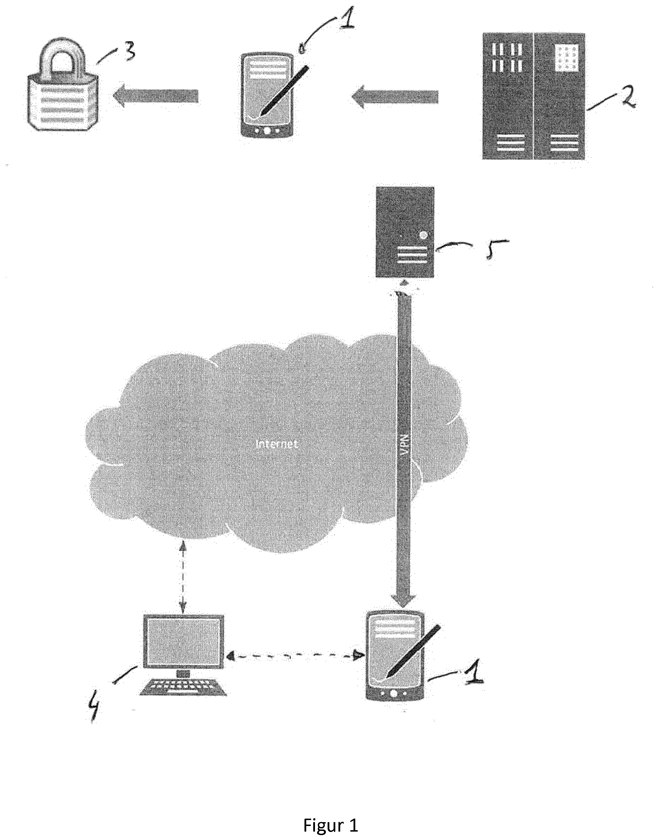

Gemäß der Erfindung und bezugnehmend auf Figur 1 wird zur Durchführung des Verfahrens ein Konfigurationsgerät 1 verwendet, welches mit dem zu konfigurierenden Gerät 2, welches bei dem gezeigten Beispiel als Verkaufsautomat ausgeführt ist, verbindbar ist, wobei die Verbindung kabelgebunden oder kabellos, z.B. über WLAN sein kann.

Das Konfigurationsgerät 1 weist eine eigene CPU, Speichermittel und Software auf und umfasst ein sogenanntes Trusted Execution Environment 3. Ferner ist das Konfigurationsgerät 1 mittels eines weiteren Computers 4 über eine sichere Netzwerkverbindung, die eine VPN-Verbindung über das Internet sein kann, mit einem Server 5 umfassend ein Trusted Execution Environment zum Zweck der Datenkommunikation verbindbar.

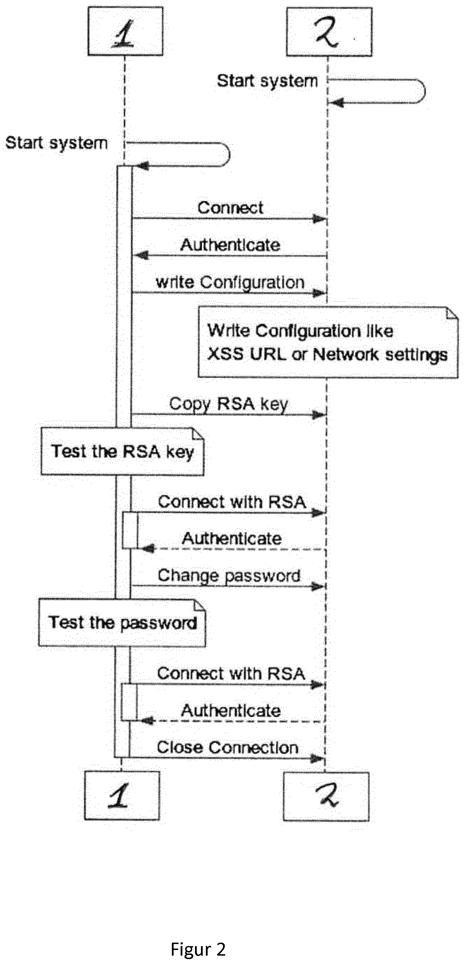

Zu Beginn des Verfahrens zur Konfiguration von elektronischen Geräten und insbesondere zur Konfiguration von Komponenten eines Zugangskontrollsystems für Personen oder Fahrzeuge wird, wie anhand Figur 2 veranschaulicht, nach dem Hochfahren des Konfigurationsgerätes 1 das Konfigurationsgerät 1 mit dem zu konfigurierenden Gerät 2 zum Zweck der Datenkommunikation kabellos oder über ein Kabel verbunden, wobei anschließend eine gegenseitige Authentifizierung, vorzugsweise mittels PGP-Verschlüsselung durchgeführt wird und wobei nach erfolgter Authentifizierung mittels des Trusted Execution Environment 3 des Konfigurationsgerätes 1 eine vorgegebene Konfiguration auf das zu konfigurierende Gerät 2 übertragen wird. Die Konfiguration umfasst Netzwerkeinstellungen und Umgebungsvariablen; hierbei kann eine Bedienperson mittels einer mit dem Konfigurationsgerät 1 verbindbaren Anzeigevorrichtung den Vorgang überwachen und manuell über eine mit den Konfigurationsgerät 1 verbindbare Eingabevorrichtung Änderungen vornehmen. Hierbei wird ohne Kenntnis der MAC Adresse des zu konfigurierenden Geräts 2 eine IP-Adresse vergeben.

In einem nächsten Schritt wird ein RSA-Schlüssel zum Ermöglichen des Zugriffs auf das zu konfigurierende Gerät über ein SSH-Protokoll mittels des Trusted Execution Environment 3 des Konfigurationsgerätes 1 ausgelesen oder generiert und auf das zu konfigurierende Gerät 2 übertragen und anschließend verifiziert, wobei anschließend mittels des Trusted Execution Environment 3 des Konfigurationsgerätes 1 ein Passwort ausgelesen oder generiert wird, welches mittels einer verschlüsselten Verbindung auf das zu konfigurierende Gerät 2 übertragen und mittels einer verschlüsselten Verbindung und einer automatischen Eingabe des Passworts überprüft wird.

In einem nächsten Schritt wird eine Datei enthaltend sämtliche Konfigurationsinformationen, beispielsweise IP- und MAC-Adressen zur Dokumentation des Konfigurationsvorgangs erstellt und außerhalb des Trusted Execution Environment 3 im Konfigurationsgerät 1 gespeichert, wobei nach Erstellen der Datei die Verbindung zwischen dem Konfigurationsgerät 1 und dem zu konfigurierenden Gerät 2 beendet wird.

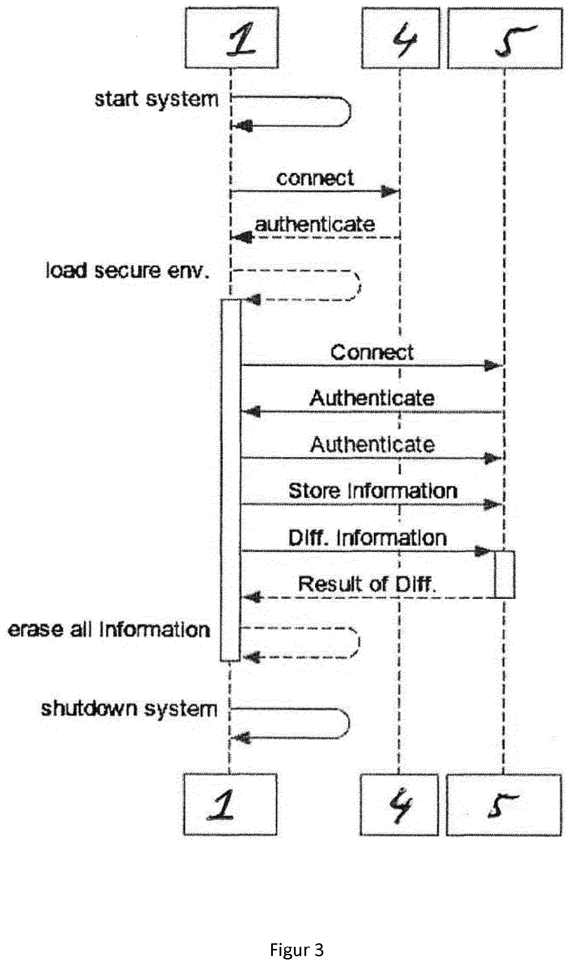

Anschließend und bezugnehmend auf Figur 3 wird eine Verbindung zur Datenkommunikation zwischen dem Konfigurationsgerät 1 und einem weiteren Computer 4 erstellt, wobei nach erfolgter gegenseitiger Authentifizierung eine sichere Netzwerkverbindung über den weiteren Computer 4 zu einem Server 5 hergestellt wird und wobei nach Durchführung einer gegenseitigen Authentifizierung zwischen dem Konfigurationsgerät 1 und dem Server 5 das Passwort, der RSA-Schlüssel und weitere vorgegebene Parameter mittels des Trusted Execution Environment 3 des Konfigurationsgerätes 1 auf ein Trusted Execution Environment auf dem Server 5 über die sichere Netzwerkverbindung übertragen werden.

In einem nächsten Schritt wird die Vollständigkeit der Übertragung des Passwortes, des RSA-Schlüssels und der weiteren wichtigen Parameter verifiziert, wobei bei erfolgter vollständiger Übertragung diese Daten im Konfigurationsgerät 1 gelöscht werden. Bei nicht vollständiger Übertragung wird der Vorgang wiederholt, bis die Übertragung vollständig erfolgt ist.

Das erfindungsgemäße Verfahren wird in vorteilhafter Weise zur Konfiguration von Komponenten eines Zugangskontrollsystems für Personen oder Fahrzeuge durchgeführt.

## Patentansprüche

1. Verfahren zur Konfiguration von elektronischen Geräten und insbesondere zur Konfiguration von Komponenten eines Zugangskontrollsystems für Personen oder Fahrzeuge, **dadurch gekennzeichnet, dass** ein Konfigurationsgerät (1) verwendet wird, welches mit dem zu konfigurierenden Gerät (2) zum Zweck der Datenkommunikation verbindbar ist, eine eigene CPU, Speichermittel und Software aufweist und ein Trusted Execution Environment (3) umfasst und mittels eines weiteren Computers (4) über eine sichere Netzwerkverbindung mit einem Server (5) umfassend ein Trusted Execution Environment zum Zweck der Datenkommunikation verbindbar ist, wobei zu Beginn des Verfahrens das Konfigurationsgerät (1) mit dem zu konfigurierenden Gerät (2) zum Zweck der Datenkommunikation verbunden wird und anschließend eine gegenseitige Authentifizierung durchgeführt wird, wobei nach erfolgter Authentifizierung mittels des Trusted Execution Environment (3) des Konfigurationsgerätes (1) eine vorgegebene Konfiguration auf das zu konfigurierende Gerät (2) übertragen wird, welche Netzwerkeinstellungen und Umgebungsvariablen umfasst, wobei anschließend mittels des Trusted Execution Environment (3) des Konfigurationsgerätes (1) ein RSA-Schlüssel bzw. ein Krypto-Schlüssel, der den aktuellen Sicherheitsstandards entspricht, zum Ermöglichen des Zugriffs auf das zu konfigurierende Gerät über ein SSH-Protokoll ausgelesen oder generiert, auf das zu konfigurierende Gerät (2) übertragen und anschließend verifiziert wird, wobei in einem nächsten Schritt mittels des Trusted Execution Environment (3) des Konfigurationsgerätes (1) ein Passwort ausgelesen oder generiert wird, welches mittels einer verschlüsselten Verbindung auf das zu konfigurierende Gerät (2) übertragen und mittels einer verschlüsselten Verbindung und einer automatischen Eingabe des Passworts überprüft wird, wobei anschließend eine Datei enthaltend sämtliche Konfigurationsinformationen erstellt und außerhalb des Trusted Execution Environment (3) im Konfigurationsgerät (1) gespeichert wird, wobei nach Erstellen der Datei die Verbindung zwischen dem Konfigurationsgerät (1) und dem zu konfigurierenden Gerät (2) beendet wird, wobei in einem nächsten Schritt eine Verbindung zur Datenkommunikation zwischen dem Konfigurationsgerät (1) und einem weiteren Computer (4) erstellt wird, wobei nach erfolgter gegenseitiger Authentifizierung eine sichere Netzwerkverbindung über den weiteren Computer (4) zu einem Server (5) hergestellt wird und nach Durchführung einer gegenseitigen Authentifizierung zwischen dem Konfigurationsgerät (1) und dem Server (5) das Passwort, der RSA-Schlüssel bzw. der Krypto-Schlüssel, der den aktuellen Sicherheitsstandards entspricht und die weiteren vorgegebenen Parameter mittels des Trusted Execution Environment (3) des Konfigurationsgerätes (1) auf ein Trusted Execution Environment auf dem Server (5) über die sichere Netzwerkverbindung übertragen werden und wobei bei erfolgter vollständiger Übertragung diese Daten im Konfigurationsgerät (1) gelöscht werden.

2. Verfahren nach Anspruch 1, **dadurch gekennzeichnet, dass** zum Übertragen der vorgegebenen Konfiguration auf das zu konfigurierende Gerät (2) eine ausführbare Datei auf einem temporären Speicher des zu konfigurierenden Gerätes (2) übertragen wird, wobei der Befehl zum Ausführen der ausführbaren Datei über das Konfigurationsgerät (1) mittels eines SSH-Netzwerkprotokolls über einen emulierten Ethernet-Port eingegeben wird.

3. Verfahren nach Anspruch 1 oder 2, **dadurch gekennzeichnet, dass** die Authentifizierung zwischen dem Konfigurationsgerät (1) und dem zu konfigurierenden Gerät (2) mittels PGP-Verschlüsselung erfolgt, wobei der entsprechende Schlüssel des Konfigurationsgerätes (1) derart erstellt ist, dass er nach einer vorgegebenen Zeitspanne seine Gültigkeit verliert.

4. Verfahren nach Anspruch 1 oder 2, **dadurch gekennzeichnet, dass** das Konfigurationsgerät (1) als USB-Stick ausgeführt ist.

## Claims

1. Method of configuring electronic devices and in particular configuring components of an access control system for persons or vehicles, **characterised in that** a configuration device (1) is used with which the device (2) to be configured is connectable for the purpose of data communication, has its own CPU, storage means and software and comprises a Trusted Execution Environment (3) and by means of a further computer (4) is connectable via a secure network connection with a server (5), comprising a Trusted Execution Environment for the purpose of data communication, wherein at the beginning of the method the configuration device (1) is connected with the device (2) to be configured for the purpose of data communication and subsequently reciprocal authentication is carried out wherein after completed authentication, by means of the Trusted Execution Environment (3) of the configuration device (1) a predetermined configuration is transferred to the device (2) to be configured which comprises network settings and environment variables, wherein subsequently by means of the Trusted Execution Environment (3) of the configuration device (1) an RSA key or crypto key in accordance with the current security standards is read out or generated via an SSH protocol to allow access to the device to be configured, is transferred to the device (2) to be configured and then verified, wherein in a next step by way of the Trusted Execution Environment (3) of the configuration device (1) a password is read out or generated which by way of an encrypted connection is transferred to the device (2) to be configured and by means of an encrypted connection and automatic entry of the password is verified, wherein a file containing all the configuration information is created and stored outside the Trusted Execution Environment (3) in the configuration device (1), wherein after creation of the file the connection between the configuration device (1) and the device (2) to be configured is terminated, wherein in a next step a connection for data communication between the configuration device (1) and a further computer (4) is set up, wherein after completed reciprocal authentication a secure network connection to a server (5) is established via the further computer (4) and after completion of reciprocal authentication between the configuration device (1) and the server (5) the password, the RSA key or the crypto key, which meets current security standards, and the further predefined parameters are transferred by means of the Trusted Execution Environment (3) of the configuration device (1) to a Trusted Execution Environment on the server (5) via the secure network connection and wherein after complete transmission these data are deleted in the configuration device (1).

2. Method according to claim 1 **characterised in that** for transferring the predetermined configuration to the device (2) to be configured a executable file is transferred to a temporary memory of the device (2) to be configured, wherein the command to execute the executable file is entered by the configuration device (1) by means of an SSH network protocol via an emulated Ethernet port.

3. Method according to claim 1 or 2 **characterised in that** the authentication between the configuration device (1) and device (2) to be configured takes place by means of PGP encryption, wherein the corresponding key of the configuration device (1) is set up in such a way that it loses its validity after a predetermined period of time.

4. Method according to claim 1 or 2 **characterised in that** the configuration device (1) is designed as a USB stick.

## Revendications

1. Procédé pour la configuration d'appareils électroniques et en particulier pour la configuration de composants d'un système de contrôle d'accès pour personnes ou véhicules,
**caractérisé en ce qu'**un appareil de configuration (1) est utilisé, lequel peut être raccordé à l'appareil (2) à configurer dans le but de la communication de données, présente une CPU propre, des moyens de stockage et un logiciel et comprend un environnement d'exécution de confiance (3), et peut être raccordé au moyen d'un autre ordinateur (4) via une connexion réseau sécurisée à un serveur (5) comprenant un environnement d'exécution de confiance dans le but de la communication de données, dans lequel, au début du procédé, l'appareil de configuration (1) est raccordé à l'appareil à configurer (2) dans le but de la communication de données et une authentification réciproque étant ensuite effectuée, dans lequel, une fois l'authentification effectuée, au moyen de l'environnement d'exécution de confiance (3) de l'appareil de configuration (1), une configuration prescrite est transférée sur l'appareil à configurer (2), laquelle comprend des réglages du réseau et des variable d'environnement, dans lequel on extrait ou génère ensuite, au moyen de l'environnement d'exécution de confiance (3) de l'appareil de configuration (1), une clé RSA ou une clé de cryptage qui correspond au standard de sécurité actuel pour permettre l'accès à l'appareil à configurer via un protocole SSH, la transfère à l'appareil à configurer (2) et la vérifie ensuite, dans lequel, lors d'une étape suivante, au moyen de l'environnement d'exécution de confiance (3) de l'appareil de configuration (1), un mot de passe est extrait ou généré, lequel est transféré au moyen d'une connexion cryptée à l'appareil à configurer (2) et est vérifié au moyen d'une connexion cryptée et d'une saisie automatique du mot de passe, un fichier contenant l'ensemble des informations de configuration étant ensuite créé et enregistré en-dehors de l'environnement d'exécution de confiance (3) dans l'appareil de configuration (1), dans lequel, après la création du fichier, la connexion entre l'appareil de configuration (1) et l'appareil à configurer (2) est arrêtée, dans lequel, lors d'une étape suivante, une connexion pour la communication de données est établie entre l'appareil de configuration (1) et un autre ordinateur (4), dans lequel, une fois l'authentification réciproque effectuée, une connexion réseau sécurisée avec un serveur (5) est établie via l'autre ordinateur (4) et après avoir effectué une authentification réciproque entre l'appareil de configuration (1) et le serveur (5), le mot de passe, la clé RSA ou clé de cryptage qui correspond au standard de sécurité actuel, et les autres paramètres prescrits sont transférés au moyen de l'environnement d'exécution de confiance (3) de l'appareil de configuration (1) à un environnement d'exécution de confiance sur le serveur (5) via la connexion réseau sécurisée, et dans lequel, une fois le transfert complètement effectué, ces données étant supprimées dans l'appareil de configuration (1).

2. Procédé selon la revendication 1, **caractérisé en ce que**, pour le transfert de la configuration prescrite sur l'appareil à configurer (2), on transfère un fichier exécutable sur une mémoire temporaire de l'appareil à configurer (2), dans lequel l'instruction pour l'exécution du fichier exécutable est saisie via l'appareil de configuration (1) au moyen d'un protocole de réseau SSH via un port Ethernet émulé.

3. Procédé selon la revendication 1 ou 2, **caractérisé en ce que** l'authentification entre l'appareil de configuration (1) et l'appareil à configurer (2) s'effectue au moyen d'un cryptage PGP, dans lequel la clé correspondante de l'appareil de configuration (1) est créée d'une manière telle, qu'elle perd sa validité après un laps de temps prescrit.

4. Procédé selon la revendication 1 ou 2, **caractérisé en ce que** l'appareil de configuration (1) est réalisé en tant que clé USB.
